Europäisches Patentamt

European Patent Office

Office européen des brevets

(19)

(11) Numéro de publication : **0 152 712**
**B1**

(12)

# FASCICULE DE BREVET EUROPÉEN

(45) Date de publication du fascicule du brevet :
15.06.88

(51) Int. Cl.⁴ : **B 65 G 57/24**, B 65 G 47/08

(21) Numéro de dépôt : 84402715.1

(22) Date de dépôt : 26.12.84

(54) **Procédé pour constituer un chargement par empilement de sacs ou boîtes en couches horizontales et dispositif pour mettre en œuvre ce procédé.** ·

(30) Priorité : 15.02.84 FR 8402275

(43) Date de publication de la demande :
28.08.85 Bulletin 85/35

(45) Mention de la délivrance du brevet :
15.06.88 Bulletin 88/24

(84) Etats contractants désignés :
AT BE CH DE GB IT LI LU NL SE

(56) Documents cités :
DE-A- 2 750 741
DE-B- 1 288 499
US-A- 3 007 585
US-A- 3 779 363

(73) Titulaire : **MEAC S.A.**
**31, rue Nicole**
**F-28000 Chartres (FR)**

(72) Inventeur : **Arnoux, Jean-Claude**
**48, rue Michel Grimaud**
**F-44110 Chateaubriant (FR)**

(74) Mandataire : **Lepeudry-Gautherat, Thérèse et al**
**ARMENGAUD JEUNE CABINET LEPEUDRY 6, rue du**
**Fg. St-Honoré**
**F-75008 Paris (FR)**

## Description

La présente invention est relative à un procédé pour constituer un chargement par empilement de sacs ou boîtes en couches horizontales ainsi qu'à un dispositif pour la mise en œuvre d'un tel procédé.

On connaît déjà des procédés pour un chargement de sacs ou boîtes en empilant ceux-ci selon des couches successives sur une palette. Une grande difficulté que doivent surmonter tous ces procédés, est de réunir les sacs ou boîtes sur une couche puis à disposer ces couches entre elles de façon que les chargements soient suffisamment stables pour être empilés sur eux-mêmes et transportés sans dommage.

Les procédés les plus courants pour constituer un chargement consistent à disposer les sacs ou boîtes unitairement, en orientant ceux-ci par des procédés mécaniques jusqu'à ce qu'ils occupent leurs positions. Les sacs ou boîtes, sont généralement orientés par des systèmes de reprises tels que ventouses, griffes, butées, etc..., puis ordonnés dans la couche. Afin de réaliser cet assemblage en couches, Il est nécessaire d'utiliser soit un convoyeur muni d'un système de rotation des sacs ou boîtes, soit de plusieurs convoyeurs permettant des variations d'orientation. Comme exemple de ce dernier cas on peut citer un procédé au cours duquel est mis en œuvre autant de convoyeurs qu'il y a de positions de sacs dans la couche.

Dans un tel cas, s'il faut modifier l'orientation d'un sac, ceci rend encore plus complexe le procédé ainsi que le dispositif pour sa mise en œuvre ; de plus il y a accroissement des risques de dégradation des sacs dus aux séquences de reprise.

Par ailleurs, les dispositifs relatifs aux procédés connus doivent être disposés sur une surface relativement importante puisque les nombreuses séquences sont obligatoirement exécutées successivement et qu'il faut accéder à toutes les parties de ces dispositifs pour les dépannages éventuels ou l'élimination des sacs qui auraient été détériorés.

Ainsi, la mise en œuvre des dispositifs connus présente des difficultés très importantes dues, d'une part, à la nécessité d'éviter la détérioration des sacs et, d'autre part, à la complexité des mécanismes pour orienter et reprendre ces sacs.

Selon le document DE-A 2 750 741, on procède à la formation simultanée de deux files de sacs, parallèles entre elles et voisines d'une table d'empilement, en envoyant alternativement un sac vers une file et vers l'autre file, selon un trajet assez long à l'aide de convoyeurs 13, 14 et 15. Il faut, seulement ensuite, effectuer un transfert, probablement simultané, des deux files sur la table d'empilement. Ce procédé prend du temps en raison de la longueur du trajet suivi par les sacs, et du fait que la formation d'une file ne s'effectue pas en même temps que le transfert de l'autre file sur la table d'empilement. En outre, le dispositif utilisé est complexe et encombrant. Celui-ci comprend un convoyeur d'aiguillage 10, deux convoyeurs de file 20, 21 et deux convoyeurs intermédiaires 13 et (14, 15) reliant respectivement le convoyeur d'aiguillage aux deux convoyeurs de file. Le convoyeur d'aiguillage se trouve éloigné de la table d'empilement en raison notamment de la présence du convoyeur courbe 14.

Selon le document DE-B 1 288 499, on amène plusieurs sacs sur chacun des deux côtés perpendiculaires d'une table d'empilement, mais jamais deux files de sacs complètes. En effet, une rotation de la table d'empilement n'étant pas envisagée, il est nécessaire, lors du transfert des sacs sur la table d'empilement, d'imbriquer les sacs provenant d'un côté avec ceux provenant de l'autre côté. Le procédé nécessite de prévoir deux convoyeurs d'alimentation séparés pour alimenter en sacs chacun des deux côtés perpendiculaires. Le dispositif associé est donc compliqué et encombrant.

Aussi un des buts de la présente invention est-il de fournir un procédé pour constituer un chargement par empilement de sacs ou boîtes en couches horizontales de façon aussi simple que possible et sans risque de détériorer ces sacs ou boîtes.

Un autre but de l'invention est de fournir un tel procédé qui comporte aussi peu d'étapes que possible.

Un objet de l'invention est un dispositif pour la mise en œuvre de ce procédé, qui occupe une faible superficie, qui soit simple et fiable.

Ces buts et ces objets, ainsi que d'autres qui apparaîtront par la suite, sont atteints par un procédé pour constituer un chargement par empilement de sacs ou boîtes en couches horizontales, au cours duquel les sacs sont transportés depuis un seul appareil d'alimentation en sacs jusqu'à une table d'empilement, consistant, à la sortie de l'appareil d'alimentation, à disposer les sacs en deux files le long de deux côtés de la table d'empilement, à effectuer un transfert de ces deux files sur la table d'empilement pour constituer une couche, à descendre la table d'empilement d'une hauteur correspondant à celle de ladite couche, puis à constituer une nouvelle couche, et, lorsque l'empilement souhaité est constitué, à l'éjecter de la table d'empilement (connu de DE-A-2 750 741), procédé caractérisé par le fait qu'on dispose les sacs le long de deux côtés perpendiculaires de la table d'empilement sans modifier leur orientation, et, une première file étant formée le long d'un premier côté de la table d'empilement, on forme une seconde file le long du second côté de la table d'empilement en même temps qu'on effectue le transfert de la première file sur la table d'empilement, puis on fait tourner la table d'empilement de 90° et on forme une nouvelle file le long du premier côté de la table d'empilement en même temps qu'on effectue le transfert de la seconde file sur la table d'empilement.

Avantageusement, lors de la descente de la table d'empilement, on effectue une nouvelle rotation de 90° de la table d'empilement dans le même sens que la première, avant de constituer une nouvelle couche.

L'invention concerne aussi un dispositif pour la mise en œuvre du procédé ci-dessus, comprenant un convoyeur d'aiguillage situé à la sortie d'un seul appareil d'alimentation en sacs et comportant des moyens pour diriger chaque sac issu de cet appareil vers l'un ou l'autre de deux convoyeurs de file, deux convoyeurs de file adjacents au convoyeur d'aiguillage, chacun possédant des moyens pour assembler les sacs en file, une table d'empilement horizontale, adjacente aux convoyeurs de file et comprenant des moyens pour son déplacement en rotation et verticalement, des moyens pour transférer chaque file de sacs, constituée sur chaque convoyeur de file, sur la table d'empilement, et des moyens pour éjecter l'empilement constitué sur cette table (connu de DE-A-2 750 741), caractérisé par le fait que les deux convoyeurs de file sont perpendiculaires entre eux.

Avantageusement, le convoyeur d'aiguillage comporte une pluralité de rouleaux parallèles motorisés et une pluralité de chaînes motorisées disposées transversalement entre les rouleaux, des moyens étant prévus pour faire coopérer tour à tour les rouleaux et les chaînes avec les sacs.

La description qui va suivre et qui ne présente aucun caractère limitatif, est relative à un mode de réalisation de la présente invention. Elle doit être lue en regard des figures annexées parmi lesquelles :

- la figure 1 représente en vue de dessus un dispositif selon la présente invention ;
- la figure 2 est une vue latérale d'un convoyeur de file ;
- la figure 3 est une vue de face d'un convoyeur de file ; et
- les figures 4 à 7 représentent quatre séquences successives de la constitution d'un empilement sur une table d'empilement.

Bien que dans ce qui suit, il ne sera fait allusion qu'à l'empilement de sacs, le procédé et le dispositif selon l'invention permettent de constituer des empilements de toutes sortes de produits à partir du moment où ceux-ci peuvent être mis en file et empilés.

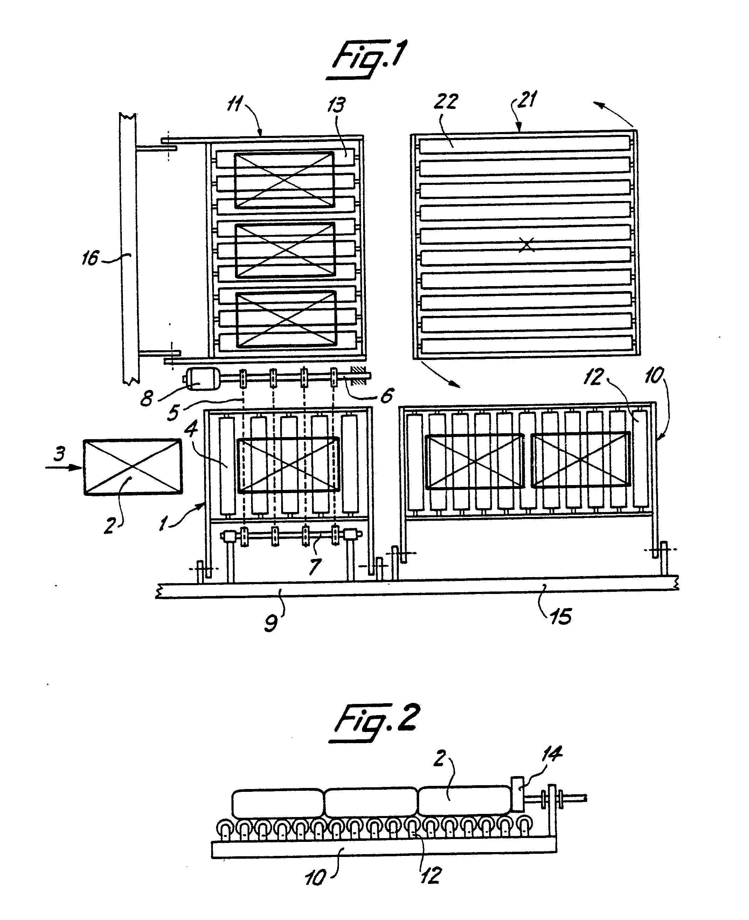

Ainsi qu'on peut notamment le voir sur la figure 1, un dispositif pour constituer un empilement de sacs selon la présente invention comprend un convoyeur d'aiguillage 1 situé à la sortie d'un appareil d'alimentation (non représenté) en sacs 2. On supposera dans cet exemple de réalisation que les sacs arrivent sur le convoyeur d'aiguillage selon le sens de la flèche 3.

Ce convoyeur d'aiguillage 1 comporte un certain nombre de rouleaux 4 parallèles, motorisés, perpendiculaires à la direction d'arrivée des sacs 2 qui est représentée par la flèche 3 ainsi que de chaînes 5 qui sont disposées dans les espaces ménagés entre les rouleaux 4 et parallèlement aux rouleaux 4.

Ces chaînes 5 s'étendent entre deux axes supports 6 et 7 dont l'un, l'axe support 6 dans cet exemple de réalisation, est entraîné de façon connue en soi par un moteur 8. Chaque axe support 6, 7 est individuellement maintenu dans des paliers fixes non-représentés sur les figures.

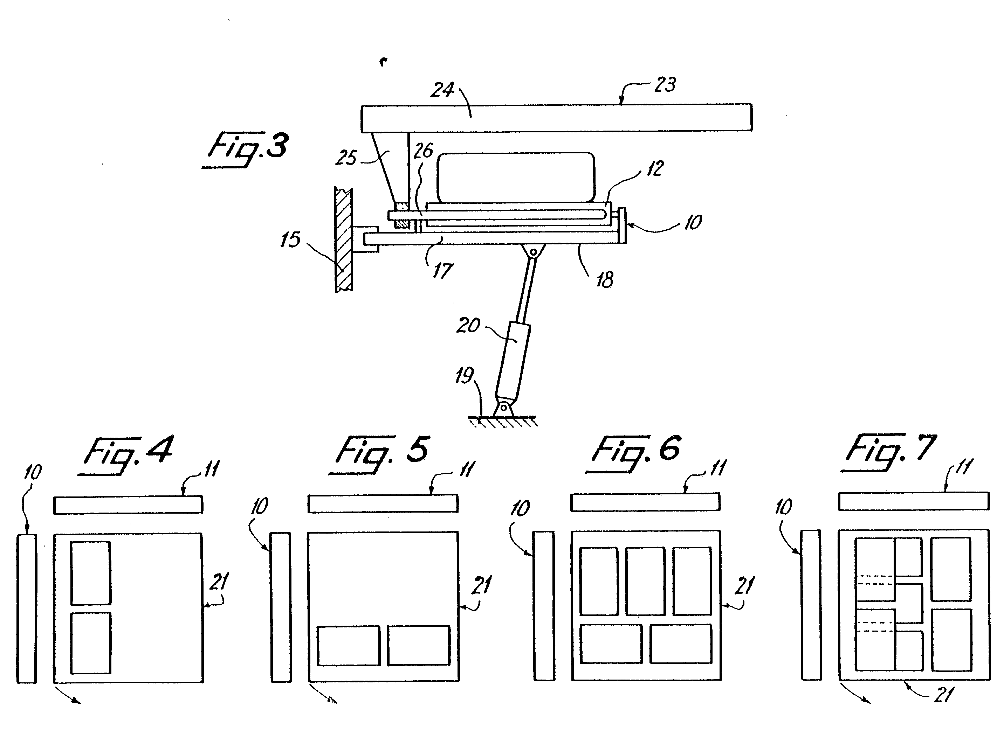

Le convoyeur d'aiguillage 1 est monté sur un châssis latéral 9, parallèle à la direction d'arrivée des sacs 2 indiquée par la flèche 3, de façon à pouvoir pivoter autour d'un axe horizontal solidaire de ce châssis latéral 9. Ainsi en faisant pivoter le convoyeur d'aiguillage 1 vers le bas autour de cet axe horizontal sous l'action par exemple d'un vérin hydraulique tel que celui décrit plus loin en regard de la figure 3, on escamote les rouleaux 4 de façon à rendre opérationnelles les chaînes 5.

Le dispositif selon l'invention comprend également deux convoyeurs de file 10, 11 qui sont perpendiculaires entre eux et adjacents au convoyeur d'aiguillage 1. En d'autres termes, l'axe d'un de ces convoyeurs de file, celui référencé 10 dans l'exemple de réalisation représentée à la figure 1, est dans le même sens que celui indiqué par la flèche 3, alors que celui de l'autre, le convoyeur 11, lui est perpendiculaire.

Chaque convoyeur de file 10, 11 de façon connue en soi comporte un certain nombre de rouleaux parallèle 12, 13 respectivement, motorisés, disposés perpendiculairement à l'axe respectif de chaque convoyeur et destinés à assembler plusieurs sacs 2 en une file. En outre chaque convoyeur comporte à son extrémité la plus éloignée du convoyeur d'aiguillage 1 des moyens pour arrêter les sacs 2 telle qu'une butée réglable 14 : ceci est notamment représenté sur la figure 2 dans le cas du convoyeur de file 10.

Chaque convoyeur de file 10, 11 et monté sur un châssis latéral 15, 16 respectivement de la même façon que le convoyeur d'aiguillage 1. Sur la figure 3, on a représenté le montage du convoyeur de file 10, mais l'autre convoyeur est monté de façon identique. Il est relié à ses extrémités au châssis latéral 15 par un support constitué par deux poutres 17 reliées par un croisillon qui sont fixées sur ce châssis latéral de manière à pivoter autour d'un axe horizontal solidaire de châssis. Entre la face inférieure 18 de ce châssis support et le sol 19 sur lequel repose le dispositif, est interposé de façon connue en soi un vérin hydraulique 20, ou tout autre moyen équivalent, pour faire pivoter le convoyeur de file 10 vers le bas autour de l'axe horizontal. Un tel vérin peut également être monté sous le convoyeur d'aiguillage 1.

Dans l'espace ménagé entre les deux convoyeurs de file 10, 11 est située une table d'empilement 21 (figure 1) qui leur est par là-même adjacente. Elle comporte également un certain nombre de rouleaux motorisés 22 et parallèles entre eux. La surface de cette table d'empilement est avantageusement carrée et ses côtés parallèles aux deux convoyeurs de file 10,

11.

Cette table d'empilement 21 comporte des moyens pour la faire pivoter autour de son axe d'un angle de 90° ainsi que pour la déplacer verticalement le long de ce même axe. Ces moyens connus de tout homme de métier ne seront pas décrits plus avant.

Le dispositif selon la présente invention comporte aussi des moyens pour transférer chaque file de sacs 2 constituée sur chaque convoyeur 10, 11, de chaque convoyeur sur la table d'empilement 21.

Au-dessus de chaque convoyeur 10, 11 est disposé un moyen de transfert désigné dans son ensemble par la référence 23 (figure 3) dans le cas de celui correspondant au convoyeur de file référencé 10. Bien entendu celui correspondant au convoyeur de file 11 lui est identique.

Le moyen de transfert 23 comporte notamment un chariot 24 mobile dans un plan horizontal c'est à dire parallèle à celui de la table d'empilement 21. Ce chariot 24 est équipé d'une fourche comportant un certain nombre de bras verticaux 25 s'étendant vers le bas par rapport au chariot ; et chaque bras vertical 25 est muni d'une dent horizontale 26 parallèle au chariot 24 et sous lui. Chaque dent 26 est intercalée entre deux rouleaux motorisés 12 et est située dans un plan inférieur à celui déterminé par ces rouleaux.

Ce moyen de transfert peut se déplacer grâce à des moyens connus et non représentés sur les figures d'une position sensiblement située au dessus du convoyeur de file à une position sensiblement située au-dessus de la table de l'empilement.

Un sac 2 qui est issu d'un dispositif d'alimentation, parvient sur le convoyeur d'aiguillage 1 qui, dans le mode de fonctionnement présentement décrit, le dirige vers le convoyeur de file 10 : autrement dit le sac 2 suit un trajet dans le sens de la flèche 3. Le sac 2 est arrêté dans son mouvement à l'extrémité du convoyeur de file 10 par la butée 14. Il sera supposé que le convoyeur de file peut comporter une file de deux sacs 2. Ainsi le sac suivant émis par le dispositif d'alimentation est-il dirigé vers le convoyeur de file 10 où son mouvement est arrêté par le sac précédent (étape a). Bien entendu les moyens de transfert sont disposés au niveau des convoyeurs de file respectifs.

Puis on fait pivoter le convoyeur d'aiguillage 1 autour de son axe solidaire du châssis latéral 9, ce qui a pour conséquence de rendre opérationnelles les chaînes 5, et non plus les rouleaux 4 comme précédemment. De ce fait, le sac 2 issu du dispositif d'alimentation est dirigé par le convoyeur d'aiguillage 1 vers le convoyeur de file 11 où une file de trois sacs 2 est constituée de façon analogue (étape a).

Lorsque la file de sacs 2 est réalisée sur le convoyeur 10, la table d'empilement 21 étant telle que ses rouleaux motorisés 22 soient perpendiculaires à ceux du convoyeur de file 10, ce dernier est abaissé par pivotement grâce au vérin 20 : les sacs reposent de ce fait sur les dents 26 du chariot mobile 24. Par un mouvement horizontal, le chariot 24 transfert les sacs 2 du convoyeur de file 10 sur la table d'empilement 21 (figure 4).

Ceci étant réalisé, la table d'empilement 21 tourne d'un quart de tour dans le sens inverse des aiguilles d'une montre (figure 5), et de façon analogue la file de sacs 2 constituée sur le convoyeur de file 11 est transférée sur la table d'empilement 21 (figure 6). Une première couche horizontale de sacs est ainsi constituée (étape b).

On fait subir à la table d'empilement une nouvelle rotation d'un quart de tour (90°) dans le même sens que précédemment et on l'abaisse d'une hauteur égale à celle d'une couche avant de recommencer une nouvelle couche (figure 7), le convoyeur d'aiguillage étant revenu à sa position initiale (étape c).

Les différentes séquences sont effectuées dans un ordre permettant de réaliser cet empilement de sacs dans les moindres détails (étape d).

Lorsque la pile de sacs est réalisée, celle-ci est avantageusement éjectée de la table d'empilement 21 (étape e).

Ainsi, selon l'invention, il n'est pas nécessaire de manipuler les sacs individuellement pour modifier leur orientation. L'utilisation de deux convoyeurs de file perpendiculaires associés à une table d'empilement tournante, permet de modifier en bloc l'orientation de tous les sacs d'une file, sans manipulation particulière de la file elle-même.

Notamment dans le cas où l'on réalise une couche de sacs au moyen de deux files seulement, une rotation de la table entre deux couches permet de croiser les sacs de deux couches adjacentes, de façon simple (figure 7).

Les files successives étant constituées sur des convoyeurs séparés, la formation d'une file peut s'effectuer en même temps que le transfert sur la table d'empilement de la file précédemment formée, et ce en utilisant pourtant une seule voie d'alimentation en sacs.

Un autre avantage très important de l'invention réside dans sa capacité. Ceci permet d'installer le dispositif en bout de chaîne avec retour du chargement terminé dans la direction de l'entrée, après éjection sous un des convoyeurs.

Pour un chargement effectué sur une palette en bois il est préférable que la palette soit préalablement déposée sur la table ; par contre il est tout à fait possible de mettre en place et de transférer le chargement sans palette ou d'intercaler une feuille plastique ou carton sous la charge au moment de l'éjection de celle-ci.

On peut également réaliser le transfert des files de sacs en faisant bouger les moyens de transfert 23 par rapport aux convoyeurs de file 10, 11 respectif et non pas, comme décrit ci-dessus, en déplaçant le convoyeur de file par rapport aux moyens de transfert.

**Revendications**

1. Procédé pour constituer un chargement par empilement de sacs ou boîtes en couches horizontales, au cours duquel les sacs sont transportés depuis un seul appareil d'alimentation en sacs jusqu'à une table d'empilement (21), comprenant les étapes suivantes :

a) à la sortie de l'appareil d'alimentation, on dispose les sacs en deux files (10, 11) le long de deux côtés de la table d'empilement ;

b) on effectue un transfert de ces deux files sur la table d'empilement pour constituer une couche ;

c) on descend la table d'empilement d'une hauteur correspondant à celle de ladite couche, puis on constitue une nouvelle couche ; et

d) lorsque l'empilement souhaité est constitué, on l'éjecte de la table d'empilement, procédé caractérisé par le fait qu'on dispose les sacs le long de deux côtés perpendiculaires de la table d'empilement sans modifier leur orientation, et, une première file (10) étant formée le long d'un premier côté de la table d'empilement, on forme une seconde file (11) le long du second côté de la table d'empilement en même temps qu'on effectue le transfert de la première file (10) sur la table d'empilement, puis on fait tourner la table d'empilement de 90°, et on forme une nouvelle file (10) le long du premier côté de la table d'empilement en même temps qu'on effectue le transfert de la seconde file (11) sur la table d'empilement.

2. Procédé selon la revendication 1, dans lequel, lors de l'étape (C), on effectue une nouvelle rotation de 90° de la table d'empilement (21) dans le même sens que la première, avant de constituer une nouvelle couche.

3. Dispositif pour la mise en œuvre du procédé selon la revendication 1, comprenant :

- un convoyeur d'aiguillage (1) situé à la sortie d'un seul appareil d'alimentation en sacs et comportant des moyens pour diriger chaque sac issu de cet appareil vers l'un ou l'autre de deux convoyeurs de file (10, 11) ;

- deux convoyeurs de file adjacents au convoyeur d'aiguillage, chacun possédant des moyens pour assembler les sacs en file ;

- une table d'empilement horizontale (21) adjacente aux convoyeurs de file et comprenant des moyens pour son déplacement en rotation et verticalement ;

- des moyens (23) pour transférer chaque file de sacs, constituée sur chaque convoyeur de file, sur la table d'empilement ; et

- des moyens pour éjecter l'empilement constitué sur cette table, caractérisé par le fait que les deux convoyeurs de file (10, 11) sont perpendiculaires entre eux.

4. Dispositif selon la revendication 2, dans lequel le convoyeur d'aiguillage comporte une pluralité de rouleaux parallèles motorisés (4) et une pluralité de chaînes (5) motorisées disposées transversalement entre les rouleaux, des moyens étant prévus pour faire coopérer tour à tour les rouleaux et les chaînes avec les sacs.

**Claims**

1. A process for forming a load by stacking bags or boxes in horizontal layers, during the course of which process the bags are transported from a single bag supplying apparatus to a stacking table (21), the process comprising the following steps :

a) at the outlet of the supply apparatus the bags are arranged in two lines (10, 11) along two sides of the stacking table ;

b) these two lines are transferred onto the stacking table to form a layer ;

c) the stacking table is lowered by a height corresponding to that of the said layer, then a further layer is formed ; and

d) when the desired stack has been formed, it is ejected from the stacking table, the process being characterised in that the bags are arranged along two perpendicular sides of the stacking table without changing their orientation, and, a first line (10) being formed along a first side of the stacking table, a second line (11) is formed along the second side of the stacking table at the same time as the first line (10) is being transferred onto the stacking table, then the stacking table is rotated through 90° and a fresh line (10) is formed along the first side of the stacking table at the same time as the second line (11) is being transferred onto the stacking table.

2. A process according to Claim 1, wherein, during step (C), the stacking table (21) is again rotated through 90° in the same direction as the first rotation, before forming a further layer.

3. A device for carrying out the process according to Claim 1, comprising :

- a switching conveyor (1) situated at the outlet of a single bag supplying apparatus and comprising means for directing each bag issuing from this apparatus towards one or the other of two line conveyors (10, 11) ;

- two line conveyors adjacent to the switching conveyor, each having means for assembling the bags in a line ;

- a horizontal stacking table (21) adjacent to the line conveyors and comprising means for its rotational and vertical movement ;

- means (23) for transferring each line of bags, formed on each line conveyor, onto the stacking table ; and

- means for ejecting the stack formed on that table, characterised in that the two line conveyors (10, 11) are perpendicular to each other.

4. A device according to Claim 2, wherein the switching conveyor comprises a plurality of motor-driven parallel rollers (4) and a plurality of motor-driven chains (5) arranged transversely between the rollers, means being provided to cause the rollers and the chains to cooperate in turn with the bags.

**Patentansprüche**

1. Verfahren zum Zusammensetzen einer Ladung aus horizontalen Säcken- oder Dosenschichten, bei dem die Säcke von einer Beschickungsstation für Säcke bis zu einer Stapelplatte (21) transportiert werden, das die folgenden Verfahrensschritte aufweist :

a) Am Ausgang der Beschickungsstation werden die Säcke in zwei Reihen entlang zweier Seiten der Stapelplatte angeordnet ;

b) diese beiden Reihen werden auf die Stapelplatte transportiert, um eine Schicht zu bilden ;

c) die Stapelplatte wird auf eine Höhe abgesenkt, die derjenigen der genannten Schicht entspricht, danach wird eine neue Schicht gebildet ; und

d) wenn die gewünschte Ladung zusammengesetzt ist, wird sie von der Stapelplatte entnommen, das Verfahren ist dadurch gekennzeichnet, daß man die Säcke entlang zweier, rechtwinklig zueinander verlaufender Seiten der Stapelplatte anordnet ohne ihre Orientierung zu ändern und eine erste Reihe (10) entlang einer ersten Seite der Stapelplatte ausbildet und eine zweite Reihe (11) entlang der zweiten Seite der Stapelplatte zur gleichen Zeit wie den Transport der ersten Reihe (10) auf die Stapelplatte ausführt, daß man danach die Stapelplatte um 90° dreht und eine neue Reihe (10) entlang der ersten Seite der Stapelplatte und gleichzeitig einen Transport der zweiten Reihe (11) auf die Stapelplatte durchführt.

2. Verfahren nach Anspruch 1, dadurch gekennzeichnet, daß man während des Verfahrensschrittes c) eine neue Drehung um 90° der Stapelplatte (21) im gleichen Sinne wie die erste Drehung durchführt, bevor eine neue Schicht gebildet wird.

3. Vorrichtung zur Durchführung des Verfahrens nach Anspruch 1, dadurch gekennzeichnet, daß sie aufweist :

- Eine Fördereinrichtung mit Verteiler (1), die am Ausgang einer einzigen Beschickungsstation für die Säcke angeordnet ist und Steuermittel aufweist, die jeden von dieser Station kommenden Sack zu der einen oder anderen Transportvorrichtung der Reihe (10, 11) lenken ;

- zwei benachbarte Transporteinrichtungen für Reihen in Form eines Verzweigungsförderers, von denen jede Mittel für die Zusammenstellung der Säcke zu einer Reihe aufweist ;

- eine horizontale Stapelplatte (21), die in Nähe der Reihenförderer angeordnet ist und Mittel für ihre Rotation und Vertikalbewegung aufweist ;

- Mittel (23) für den Transport jeder Sackreihe, die auf jeder Reihentransportvorrichtung zusammengestellt ist, auf die Stapelplatte und

- Mittel für die Entnahme des auf der Stapelplatte gebildeten Ladungsstapels, dadurch gekennzeichnet, daß die beiden Förderer der Reihen (10, 11) rechtwinklig zueinander verlaufen.

4. Vorrichtung nach Anspruch 3, bei der Verzweigungsförderer eine Vielzahl von parallelen, angetriebenen Rollen (4) und eine Vielzahl von angetriebenen Ketten (5) aufweist, die transversal zwischen den Rollen angeordnet sind, und daß Mittel für das wechselseitige Zusammenwirken der Rollen und der Ketten mit den Säcken vorgesehen sind.

## Fig.1

## Fig.2

1

Fig.3

Fig.4

Fig.5

Fig.6

Fig.7

0 152 712